# EUROPEAN PATENT APPLICATION

(11) **EP 1 202 544 A1**
(43) Date of publication of application: **02.05.2002**
(21) Application number: 00123686.8
(22) Date of filing: 30.10.2000
(51) Int. Cl.: H04M 11/06

(54) **System and method for distributing voice and data**

(71) Applicant: Telefonaktiebolaget L M Ericsson (Publ), 126 25 Stockholm (SE)
(72) Inventor: Larsen, Peter, 144 40 Rönninge (SE)
(74) Representative: Bergentall, Annika Maria

(57) **Abstract**

The present invention relates to providing customer premises (10) with broadband data communication services access and narrowband telecommunication services access using a cable (1) from a public communications network (PSTN,ISDN). A distribution network comprising a number of (telephony) jacks (11,...,19) at the subscriber premises (10), is provided and ADSL technology is implemented. The distribution network is used as a distribution network for both higher frequency signals for broadband communication and lower frequency signals for narrowband communication, and an optional (telephony) jack is used for connection of a splitter filter (50) for separating higher frequency signals from lower frequency signals. Broadband access means (50) are connected to a high frequency port of the splitter filter and narrowband access (50) means are connected to a low frequency port of the splitter filter and each of said broadband and narrowband access means comprises a number of user interfaces.

## Description

### FIELD OF THE INVENTION

The invention present invention relates to the provision of broadband communication services access and particularly it relates to providing a user or a customer at a customer premises with access to broadband services as well as to narrowband (POTS, Plain Old Telephony) services or services using a lower frequency band using ADSL (Asymmetrical Digital Subscriber Line) technology. Even more particularly it relates to the installation of an arrangement and a method for providing a user or a customer premises with an existing distribution network for POTS services with access to broadband services in addition to narrowband services.

### STATE OF THE ART

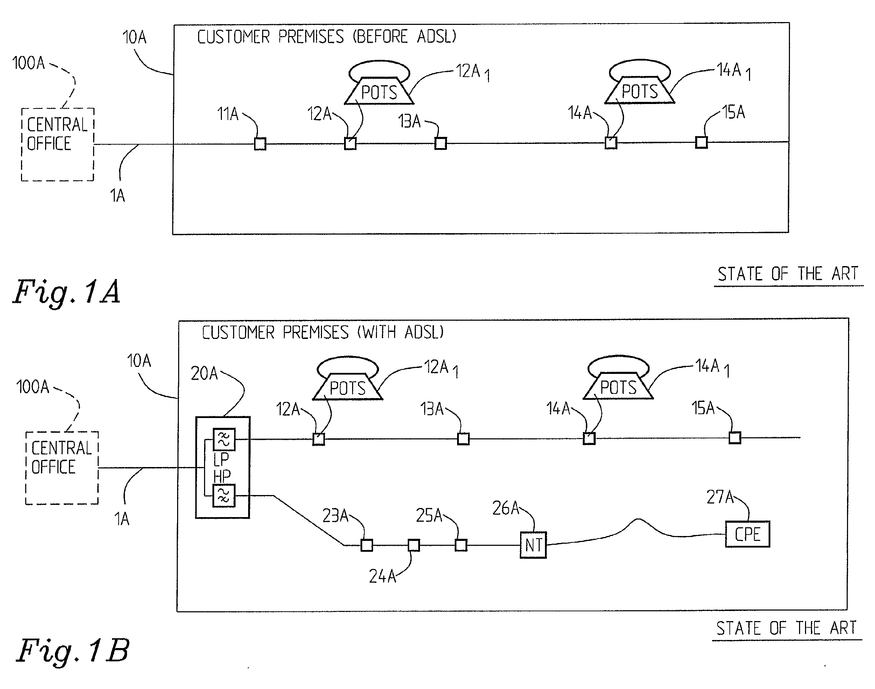

ADSL uses a (twisted) wire pair with analog to digital conversion at the subscriber end. The ADSL technology is e.g. described in the ADSL standard ANSI (American National Standards Institute) T1.413 issue 2 and ITU-T (International Telecommunications Union) G.992 which herewith are incorporated herein by reference, and it uses ADSL interface units at a central office and ADSL interfaces at the subscriber's premises. However, the use of ADSL to provide users with access to broadband data communication has so far not been implemented to a high extent. One of the main reasons therefore is that the overall costs tend to get high. Generally it is not the costs for the required equipment that prevents a broad implementation but the installation costs which indeed tend to get very high. In fact the installation costs at the central office and at the customer premises are higher than the costs for the equipment needed to put ADSL into practice. ADSL can be used for broadband access to the customer premises over the same copper pair wire as is used for the POTS telephony services. Broadband services and POTS services can then be offered at the same time and POTS uses the VF (Voice Frequency) baseband whereas ADSL uses higher frequencies. At the customer premises, i.e. a user location which may be a flat in a multitenant building or a private house or anything alike, the high frequency band and the VF band must be separated before distributed to a broadband NT (Network Termination) and the POTS distribution network within the customer premises. Fig. 1A illustrates a customer premises 10A before installation of ADSL. A cable comprising a twisted pair from a central office 100A is used for connection purposes and 11A,12A,13A,14A,15A illustrate telephony jacks. Plain Old Telephony Service (POTS) devices or fixed stations 12A₁,14A₁ are connected to telephony jacks 12A,14A.

Fig. 1B illustrates the same customer premises after installation of ADSL. The twisted pair cable 1A from the central office 100A is still used and a splitter filter 20A is introduced to separate the high frequency band and the VF band before distribution to a broadband NT 26A and the (old) POTS distribution network comprising telephony jacks 12A,13A,14A,15A as above. A number of broadband jacks 23A,24A,25A may be provided to enable a flexible placement of the broadband network termination NT 26A. The Customer Premises Equipment CPE 27A is connected to NT 26A over e.g an Ethernet or an USB (Universal Serial Bus) cable. This is a straightforward installation of ADSL and the NT is placed somewhere between the splitter filter 20A and the Customer Premises Equipment CPE 27A.

To increase the mobility for broadband applications within the customer premises and to simplify the installation, a radio LAN (Local Area Network) could be utilized between the NT 26A and the CPE 27A. Through providing several broadband jacks 23A,24A,25A on the ADSL distribution cable it is also possible to achieve some mobility.

However, there are several problems associated with the installation of ADSL at the customer premises which will reduce the probability for a successful and cost-effective installation. The installation as such is often difficult also for persons normally skilled in the particular technical field. Some of the problems related to the installation work will be described below.

First the telephony jack were the twisted pair cable from the central office enters the customer premises has to be located. This can be very difficult since normally no drawings are available showing the cabling at the customer premises or alternatively the drawings, if available, have not been updated when changes have been done etc. The cabling may be done with serially placed jacks or the jacks may be arranged in a star configuration, or a mix of serial and star distribution configuration may be used. The jacks may e.g. be with or without a "security switch" functionality, as for example is used in Sweden, e.g. when a POTS device connected to the first jack is off hook, all other devices connected to other jacks are disconnected, irrespectively of whether they are on or off hook.

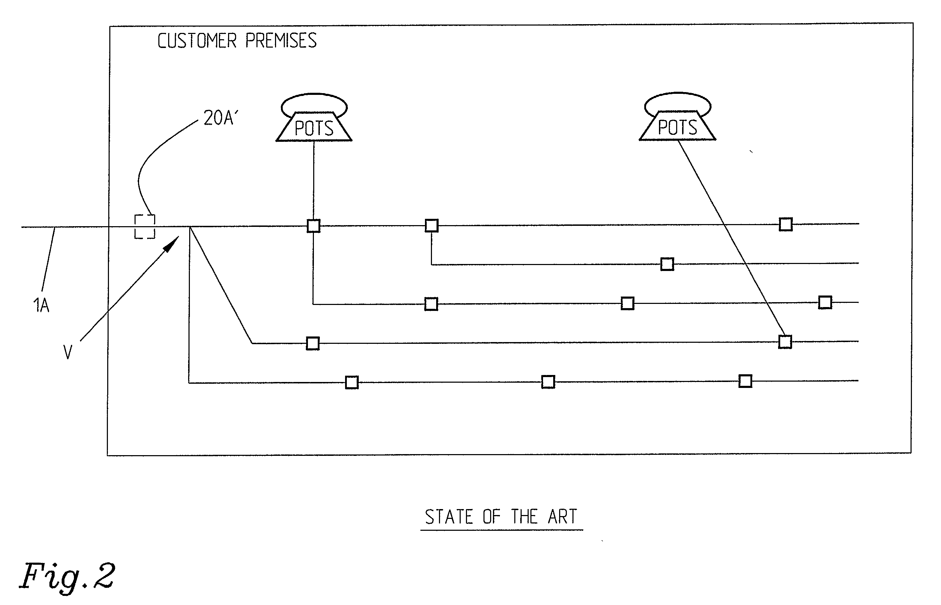

The result will be that it tends to be very time consuming to locate the jack closest to the central office or the jack where the cable enters the customer premises. An example on a complicated cabling at a customer premises is illustrated with reference to Fig. 2. In that case there is not even a single first jack but a branching point is located before the first jack. This means that first the branching point has to be found. When this has been done, the incoming twisted pair cable has to be cut between the point where the cable enters the customer premises and the first jack (or the first POTS telephone) or, if a branching point comes first, before the branching point. Where the cable is cut, the splitter filter is to be inserted, cf. 20A' in Fig. 2.

In the splitter filter a LP (Low Pass) filter blocks the ADSL high frequencies in order to prevent them from reaching the POTS telephones connected to the jacks. Then a cable is installed between the HP (High Pass) output of the splitter filter and the location where an interface for broadband access is desired. Somewhere between the HP output of the splitter filter and the broadband CPE an ADSL NT (Network Termination) is inserted on the cable. The NT terminates the ADSL signals and it is able to offer specific user interfaces, e.g. Ethernet and USB for the CPE. Mostly it is desirable to locate the NT close to the equipment that will use the broadband service.

Since the mobility for the broadband services generally is limited within the customer premises, a radio LAN can be utilized as discussed above. Alternative a new cabling can be built to a number of ADSL jacks as shown in Fig 1B. Particularly the radio LAN enables a flexible location both for the narrowband services and for the broadband services. But still the very complicated installation of a splitter involving the problems referred to above is required. What is discussed above considerably contributes to a complicated installation and high installation costs for ADSL at a customer premises.

### SUMMARY OF THE INVENTION

What is needed is therefore a system, an arrangement and a method respectively through which broadband data communication services access can be provided in an easy and cost effective manner, particularly in addition to narrowband (e.g. POTS) communication services access. A system etc. is also needed allowing a flexible provision of broadband data communication services access to a subscriber or a customer premises. A system, and an arrangement etc. is also needed through which broadband services access mobility can be provided.

Particularly an arrangement, a system and a method respectively is needed through which particularly the installation of broadband data communications access (and narrowband access) can be done by the subscriber or customer himself. Particularly a system, an arrangement and a method respectively is needed through which ADSL technology easily and cost effectively can be installed at a subscriber premises. Further yet a system etc. is needed through which the installation costs at the customer premises using ADSL can be considerably reduced and facilitated as compared to for hitherto known systems. Particularly it is needed to provide a cheaper and facilitated installation of ADSL for broadband access at a customer premises at the same time as narrowband communications services are provided and particularly at a customer premises in which a distribution network for narrowband (POTS) services access is available and a cable, particularly a pair cable which e.g. is twisted or a coaxial cable or any other appropriate cable, from a central office of a public communication system, e.g. PSTN or ISDN (Public Switched Telephony Network, Integrated Services Digital Network) is used. A system, an arrangement and a method is also needed through which the mobility for broadband applications within the premises can be provided for. Moreover a system, an arrangement and a method respectively is also needed for which particularly the installation of a splitter filter is considerably facilitated bearing in mind the initially discussed problems related to the localisation of the first telephony jack on the cable entering the customer premises, or, eventually a branching point before any first telephony jack, when there already is a POTS distribution network provided at the customer premises.

Therefore the present invention provides for a system for providing a subscriber/customer premises with broadband data communication services access and narrowband telecommunication services access by the use of a cable, e.g. a twisted pair cable or any other appropriate cable as referred to above, from a public communications network and of a distribution network comprising a number of telephony jacks and further by implementing ADSL technology. A splitter filter is provided for separating higher frequency signals for broadband communication from lower frequency signals for narrowband (POTS) telecommunication. The distribution network is according to the invention used as a distribution network for both higher frequency signals and lower frequency signals and any, an optional or an arbitrary, telephony jack can be used for connection of the splitter filter. Broadband access means are connected to a high frequency port of the splitter filter whereas narrowband access means are connected to a low frequency port of the splitter filter. Each of the access means comprises a number of user interfaces, e.g. one or more. Particularly, if a narrowband or POTS distribution network already is provided at the customer premises, it is used for both higher and lower frequency signals, i.e. also for broadband communication.

Thus, instead of using the existing cabling at a customer premises for narrowband services access or POTS (Plain Old Telephony Services) access, the cabling or the existing distribution network is used for a flexible distribution of broadband access as well. Only one jack at the customer premises is used and from this jack both narrowband and broadband services are distributed. To this, freely selectable, jack, the splitter filter is connected. The broadband access means particularly comprises an ADSL network termination which particularly may comprise an ADSL modem and a number of user interfaces for communication with a number of user stations, e.g. Customer Premises Equipment (CPE) such as for example one or more PCs. The user interfaces for broadband access may comprise one or more of an USB-interface, an ATM (Asynchronous Transfer Mode) -interface and an Ethernet interface. Of course also other interfaces may be used.

The narrowband access means comprises means for access to a separate local network. A wireless separate local network may with advantage be used and the narrowband access means will then comprise a base station. In an advantageous implementation the narrowband access means comprises a DECT (Digital European Cordless Telephone) base station. Of course it does not have to be DECT; any appropriate cordless access system can be used. Thus, according to the invention a new cost effective narrowband, particularly POTS, distribution from the splitter filter within the premises is provided and one solution is to utilize DECT. Particularly the narrowband access means also comprises a POTS interface comprising a pair cable on which one or more telephony jacks can be provided. The separate network can also be in the form of any radio, IR or copper distribution network but the DECT system is advantageous in that it is standardised and a well established product which has a good performance. It is also easy to install and flexible.

The customer premises may be connected to a PSTN over the (pair) cable but it may also be connected to an ISDN network over the (pair) cable. If it is connected to an ISDN network, the narrowband access means comprises an ISDN network termination with converting means for frequency modulation to a narrowband/POTS interface for connection to a separate local network, e.g. a wireless local network.

According to one implementation the broadband and the narrowband access means are integrated in a common entity or unit. In another embodiment the splitter filter and the broadband access means, e.g. an ADSL network termination, are integrated in a common entity. Still further the splitter filter and the narrowband access means may be integrated in a common entity.

In the most integrated form the splitter filter, the narrowband access means and the broadband access means are all integrated in a common entity. It is of course also possible to have a separate splitter filter, separate broadband and narrowband access means.

Preferably the splitter filter or an entity comprising splitter filter and narrowband access means and/or broadband access means, is detachbly connected to any existing telephony jack which then will not only function as a telephony jack but for distribution of broadband as well as narrowband signals. Thus, as referred to above the most integrated form comprises a box including the splitter filter, narrowband access means, e.g. a DECT base station, and an ADSL network termination with user interfaces. Optionally the network termination should also offer a POTS interface to support telefax, answering machines and the so called "life line" service. The life line service would of course also in this case work without power supply. However, it is not required to put everything in one common entity, it is also possible to have for example a standard DECT base station connected to a POTS interface of a combined splitter filter/ADSL network termination or any other alternative as referred to above. It is also possible to use a standard splitter filter, a standard DECT BS and a standard ADSL NT and to connect DECT BS and ADSL NT to the LP and HP ports respectively of the splitter filter.

According to the invention it is easy to move the splitter filter (with or without integrated broadband access means and/or narrowband access means) to another location within the subscriber premises. It just has to be disconnected and moved to the telephony jack where the broadband interface(s) currently is/are needed. Even if the broadband and/or narrowband access means are not integrated with the splitter filter, they must of course be connected to the respective HP/LP ports of the splitter filter.

The invention also provides for an arrangement for providing broadband data communication access in addition to narrow band telecommunications access at a customer premises. A narrowband distribution network is provided which communicates over a (pair) cable with e.g. a PSTN or an ISDN. The arrangement comprises a splitter filter and broadband access means comprising an ADSL network termination. The arrangement further comprises narrowband access means for interfacing a separate distribution network and the splitter filter is connected to an arbitrary, optional, jack of the existing distribution network. Particularly the narrowband access means comprises a base station of a wireless local network. The base station may even more particularly comprise a DECT base station. The splitter filter may, or may not, be combined or integrated with a narrowband access means and/or broadband access means with user interfaces. Particularly an already existing distribution network, which was used for POTS access only, is used.

The invention also provides for a method of providing broadband access to a customer premises fulfilling one or more of the objects initially referred to. The method includes the steps of; providing a distribution network, unless there already is an existing (narrowband) distribution network, at the customer premises; selecting a jack on the (existing) distribution network; connecting a splitter filter or a splitter filter and broadband access means or splitter filter and narrowband access means or splitter filter and broadband access means and narrowband access means to the selected jack; connecting Customer Premises Equipment (CPE) to broadband user interface(s) of the broadband access means; providing a separate distribution network for narrowband (POTS) access. Particularly the method includes the steps of providing a wireless local network as a separate network for narrowband access. The method particularly includes the steps of providing a base station, e.g. a DECT base station with an antenna as a radio user interface. A conventional POTS interface may also be provided in addition to the wireless local network. Then the narrowband access means comprises a BS as well as a conventional POTS interface.

Thus, the provision of broadband as well as narrowband access will be considerably simplified, particularly if the customer premises already has a POTS distribution network, since there is no need for finding the first jack or the first branching point before a splitter filter can be inserted. The installation of the splitter filter will be considerably facilitated through the present invention and a lot of time is saved since there is no need to locate the jack and according to the invention, in principle any person, i.e. the subscriber himself may easily install a system/an arrangement allowing broadband access in addition to narrowband access. It is also very advantageous to provide narrowband (telephony services) access by means of e.g. DECT.

### BRIEF DESCRIPTION OF THE DRAWINGS

The invention will in the following be further described in a non-limiting manner and with reference to the accompanying drawings, in which:
- Fig. 3: shows one example of an installation utilizing a combined, integrated entity comprising a splitter filter, a broadband network termination and a base station,
- Fig. 4: shows one implementation of a combined entity comprising a splitter filter, narrowband access means, comprising a DECT base station, and broadband access means comprising an ADSL network termination when the customer premises is connected to a PSTN,
- Fig. 5: shows one example on an integrated entity comprising a splitter filter, an ADSL network termination and narrowband access means comprising an ISDN network termination when the customer premises is connected to an ISDN,
- Fig. 6: schematically illustrates a customer premises as in Fig. 3 wherein a splitter filter is connected to a telephony jack and wherein narrowband and broadband access means are provided in a common entity,
- Fig. 7: shows a customer premises similar to that of Fig. 3 wherein a combined entity comprising a splitter filter and broadband access means is connected to a jack and wherein separate narrowband access means are provided,
- Fig. 8: shows another example on a customer premises wherein a combined entity comprising a splitter filter and a narrowband access means is connected to a telephony jack and wherein the broadband access means are provided separately,
- Fig. 9: is a schematical flow diagram describing one way of providing of broadband (and narrowband) access to a customer premises according to one embodiment, and
- Fig. 10: is a flow diagram describing one example on installation of an arrangement for providing broadband and narrowband access at a customer premises wherein an integrated device with splitter filter, broadband NT and a DECT BS is used.

### DETAILED DESCRIPTION OF THE INVENTION

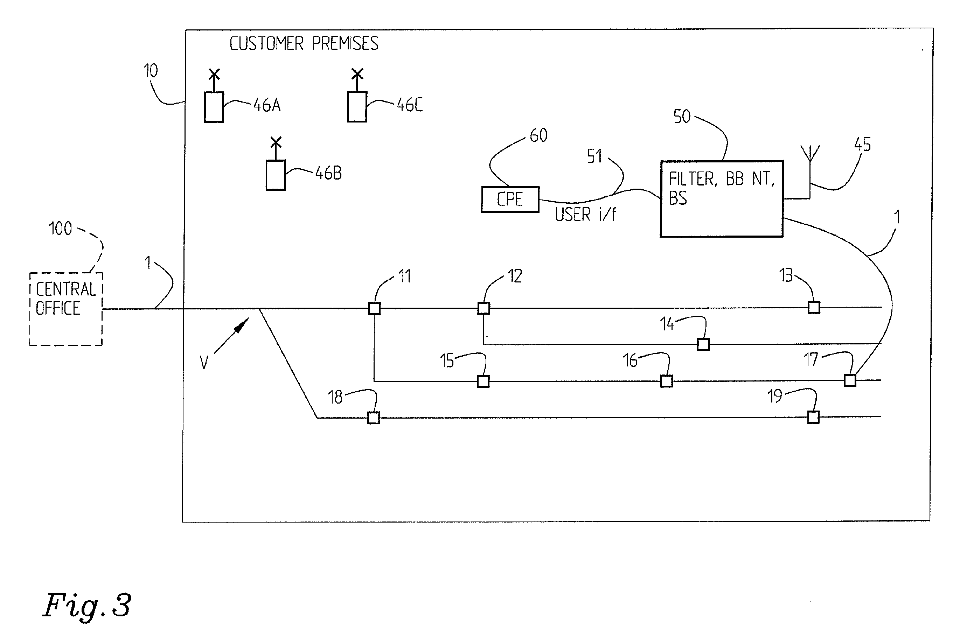

Customer premises 10 of Fig. 3 is via, e.g. a twisted, pair cable 1 connected to a central office 100 (supporting ADSL services) of for example a PSTN (not shown). It is here supposed that a plurality of telephony jacks 11,12,13,14,15,16,17,18,19 already are provided at the customer premises 10. Before all the jacks there is a branching point V and, if ADSL should have been introduced using known technology, the splitter filter by necessity would have had to be provided before the branching point V. However, according to the invention, any one of the telephony jacks can be selected, and in this specific embodiment telephony jack 17 is selected. Here the splitter filter, the broadband network termination broadband (BB) NT and the narrowband network termination, here comprising a base station BS, are all integrated in a common entity 50 to which base station antenna means 45 is connected. POTS (telephony) or narrowband access is here distributed via a separate network comprising a wireless local network, for example DECT and the (DECT) base station can be said to be integrated or included in the broadband network termination, particularly an ADSL NT. From jack 17 are thus narrowband services or POTS services as well as broadband services distributed. Advantageously also a POTS interface may be provided to support telefax, answering machines etc. (not shown in this Fig.). The combined entity also comprises a broadband user interface 51 e.g. an USB interface but it may also be other kinds of interfaces such an Ethernet interface or an ATM interface. Customer Premises Equipment CPE 60, e.g. a PC or some other equipment is connected to the broadband user interface 51. For telephony service portable parts (PP) or hand sets 46A,46B,46C communicate via radio with base station BS over antenna 45.

The existing cabling at the customer premises is thus used to distribute narrowband as well as broadband services and the existing distribution network or cabling is used as a distribution network for both narrowband and broadband services and any jack can be used for connection of the combined entity 50. It is also easy to move the combined, integrated, entity 50 to another location within the premises; it just has to be disconnected and moved to one of the other jacks where the broadband user interface actually is needed. Thus, for provision of broadband services as well as narrowband services, it is not necessary to find the first telephony jack within the premises or any possible branching point preceding the first jack. In addition thereto broadband access mobility is provided.

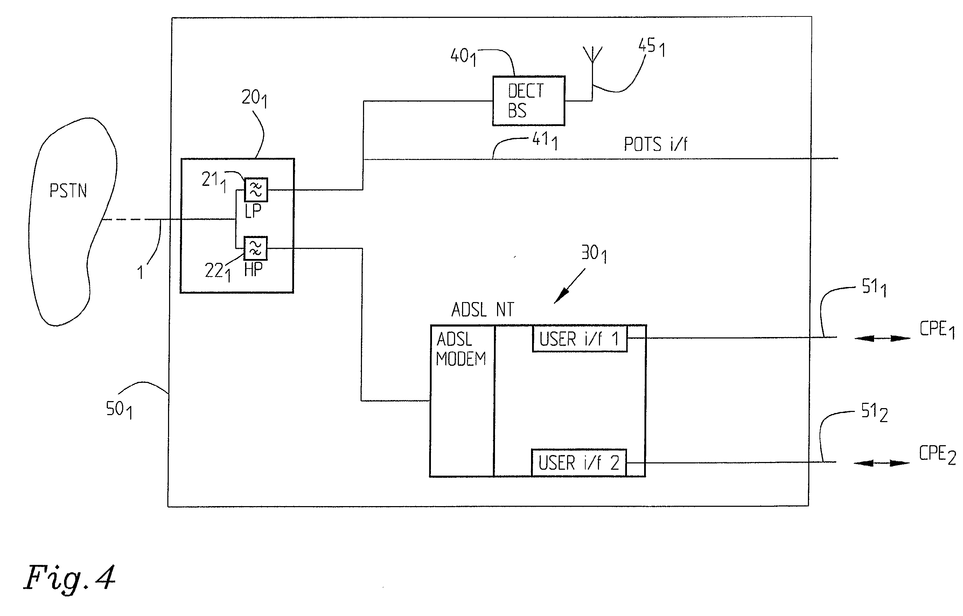

Fig. 4 illustrates one example on an integrated entity 50₁ e.g. for broadband access using ADSL over PSTN. The combined or integrated entity 50₁ here comprises a splitter filter 20₁ comprising a low-pass filter LP 21₁ and a high-pass filter HP 22₁. In the splitter filter 20₁ the low-pass filter 21₁ blocks the ADSL high frequencies in order to prevent them from reaching the POTS telephones or the wireless communication system whereas the high-pass filter 22₁ blocks the lower frequency signals from reaching the ADSL NT 30₁. The ADSL NT 30₁ terminates the ADSL signals and it comprises an ADSL modem, a first user interface 1 and a second user interface 2 (in this case) e.g. an USB interface and/or an Ethernet interface or any other appropriate interface 51₁, 51₂ connecting to Customer Premises Equipment CPE₁ and CPE₂ respectively. The number of broadband user interfaces is irrelevant and instead of two there may be one or more than two as well. The combined entity here comprises a DECT base station 40₁ with a base station antenna 45₁ for distribution of narrowband services. Advantageously a POTS interface 41 is also provided for connection of e.g. a telefax and/or an answering machine.

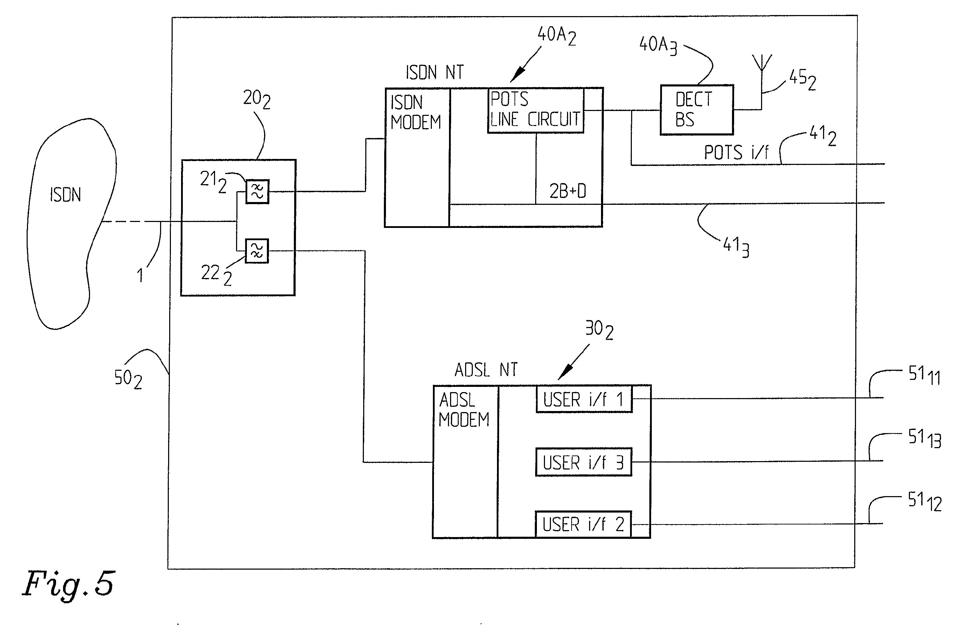

Fig. 5 shows another example on a combined, integrated entity 50₂ for providing broadband services access (and narrowband services access) by means of ADSL over ISDN. Then should also an ISDN network termination functionality be included. Also in this embodiment it is supposed that a splitter filter 20₂, broadband access means 30₂ and narrowband access means 40₂ are integrated in a common entity. The twisted pair cable 1 (of course it also may be any other appropriate cable) is used for communication with ISDN and is connected to splitter filter 20₂ with high-pass filter 21₂ and low-pass filter 22₂ as described above. A cable is provided between the high-pass output of the filter and the broadband access means comprising an ADSL NT 30₂ which comprises an ADSL modem and, for example, three user interfaces, e.g. USB, Ethernet, LAN etc. which interfaces 51₁₁,51₁₃,51₁₂ are connected to Customer Premises Equipment such as PCs etc (not shown). The low-pass filter output is connected to an ISDN network termination 40A₂ comprising an ISDN modem, a POTS line circuit and a 2B+D interface 41₃. The 2B+D interface comprises two 64 kbps channels for speech and data and a 16 kbps channel for control signalling, as is well known in the art. The POTS line circuit 40A₂ interfaces a DECT base station 40A₃ with a base station antenna 45₂. Advantageously (optionally) also a POTS interface is provided for telefax connection, answering machine connection etc. It is also possible to use some other wireless local network. In this case the narrowband access means thus comprises an ISDN NT 40A₂, with ISDN interface 41₃, a DECT base station 40A₃ and a conventional POTS interface 41₂.

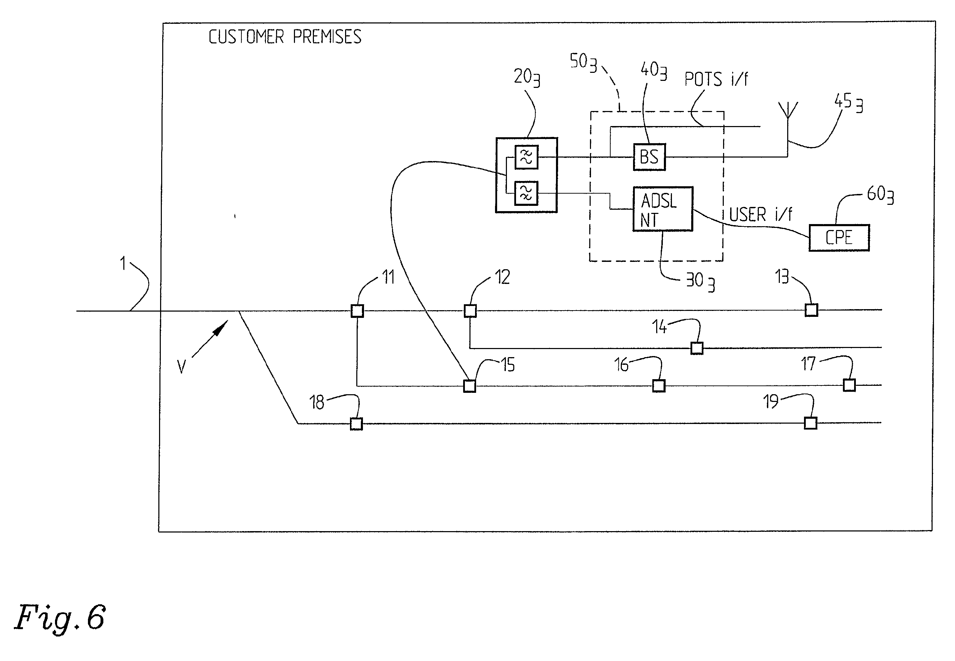

Fig. 6 shows still an alternative implementation. The customer premises is connected to for example PSTN over e.g. a twisted pair cable 1 as in the preceding embodiments, and, for reasons of simplicity, it comprises telephony jacks 11,....,19 as in Fig. 3. It is here supposed that telephony jack 15 is selected and a separate splitter filter 20₃ comprising a high-pass filter and a low-pass filter as above is connected to it via a cable. Also in this case an integrated entity 50₃ is provided but in this case it merely comprises narrowband access means 40₃, e.g. comprising a base station BS, and broadband access means comprising a ADSL NT 30₃ connected to the low-pass and the high-pass outputs of the splitter filter 20₃ respectively. The narrowband access means also comprises a conventional POTS interface and a base station antenna 45₃ is connected to base station BS. A user interface for broadband services provides for communication between ADSL NT 30₃ and Customer Premises Equipment CPE 60₃. This is an example illustrating that a splitter filter can be provided separately whereas broadband and narrowband access means respectively are provided in a common entity.

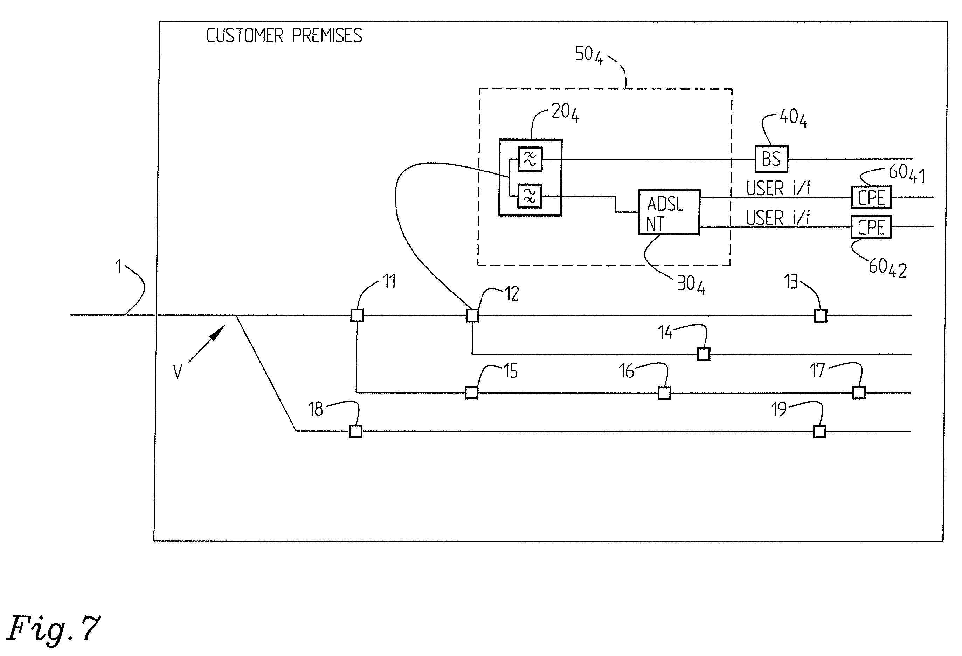

Fig. 7 again shows a customer premises to which a twisted pair cable or any other appropriate cable 1 is connected and a distribution network comprising telephony jacks 11,...,19. Of course there can be any other number of telephony jacks and the distribution network may take any other form; the figure merely intends to illustrate an alternative way of providing the functionalities of a splitter filter, broadband and narrowband access means respectively. It is here supposed that jack 12 is selected and that a combined entity 50₄ comprises a splitter filter 20₄ with a high-pass and a low-pass filter respectively as discussed above and the combined entity furthermore includes the ADSL NT 30₄, i.e. the broadband access means with, here, two user interfaces e.g. of the kinds as described above. It is here also supposed that the narrowband access means comprises a base station 40₄ which is provided separately, i.e. it is not provided in the same entity or box as the broadband access means and the splitter filter. Like in preceding embodiments, it is connected to the low-pass output of the splitter filter 20₄. For reasons of simplicity there is no base station antenna illustrated since it is obvious for any one skilled in the art that it has to be provided and it is also illustrated through the preceding figures. It is also in this embodiment possible to have a conventional POTS interface as discussed above even if it is not shown in the figure, as forming part of the narrowband access means.

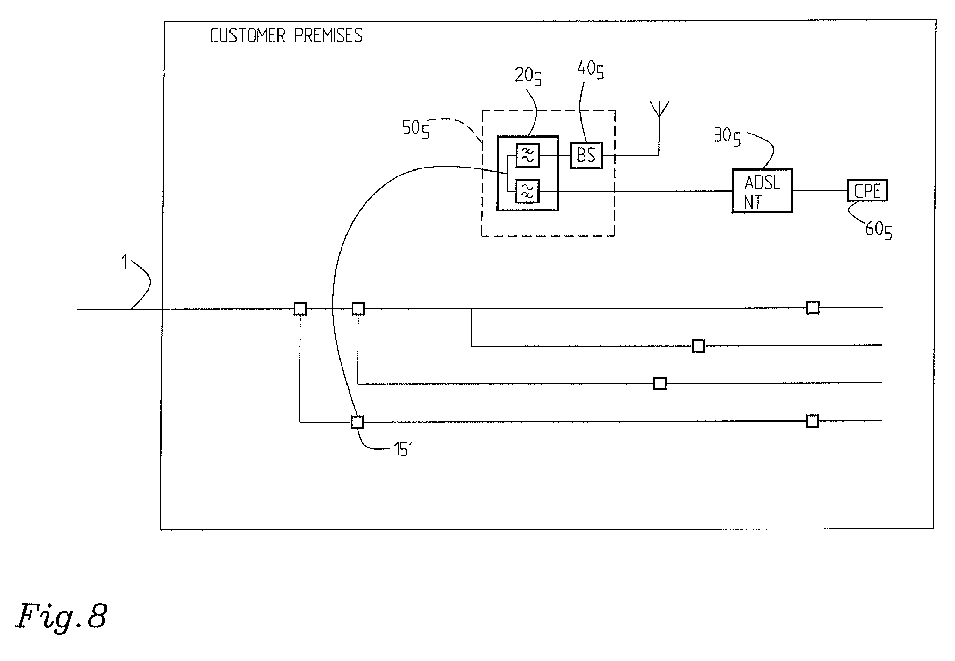

Fig. 8 shows still another alternative implementation in which a customer premises comprises a distribution network communicating over e.g. a twisted pair cable 1 with a communications network, e.g. PSTN. A number of telephony jacks are provided and the distribution network has a different configuration from the one of the preceding figures. It is here supposed that a jack 15' is selected. The combined entity 50₅ here comprises a splitter filter 20₅ and narrowband access means 40₅ comprising a base station with a base station antenna. There may also be a conventional POTS interface provided from the low-pass filter output, which however is not shown. An ADSL NT 30₅ is connected to the high-pass filter output. In this embodiment there is just one broadband user interface for connection to CPE 60₅ illustrated. It should be clear that there may of course be more broadband user interfaces.

Although in Figs. 3-8 the narrowband access means are illustrated as comprising a base station, e.g. a DECT base station, it should be clear that, for e.g. ADSL over ISDN, an ISDN network termination would have to be provided as a part of the narrowband access means connected to the low-pass filter output and preceding e.g. a base station. It should also be clear that, instead of a base station, a separate network may be provided for distribution of narrowband, e.g. POTS services. However, it is extremely advantageous to use a wireless local network, since then there is no need to install a network within the customer premises.

In a still another embodiment, not shown, splitter filter, narrowband access means and broadband access means can be provided as separate entities, particularly may any known ADSL NT, DECT BS and splitter filter available on the market be used.

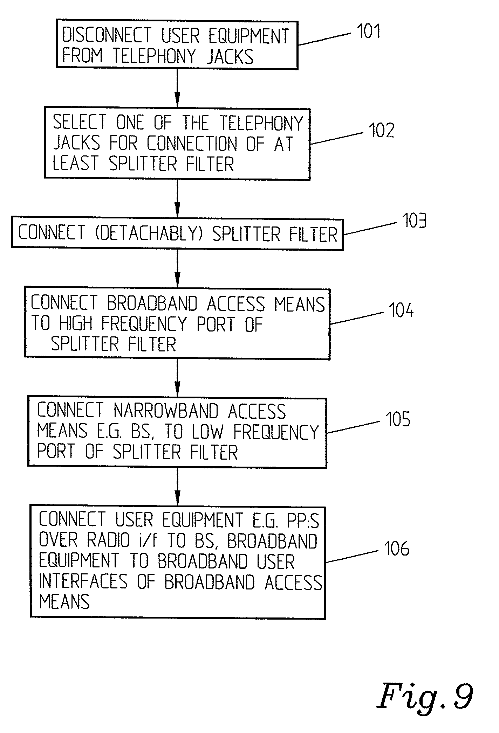

Fig. 9 is a very schematical flow diagram describing one example on the provision of broadband access by ADSL at a customer premises. It is then supposed that first all user equipment, e.g. POTS telephones, fax machines, answering machines etc., are disconnected from their respective telephony jacks, 101. Then one of the telephony jacks is selected e.g. the one where broadband services access is needed, 102, to which at least a splitter filter is to be connected. The splitter filter is then, preferably detachably, connected to the selected telephony jack, 103. Subsequently the broadband access means are connected to the high frequency port of the splitter filter, 104 and the narrowband access means, e.g. a base station, is connected to the low frequency port of the splitter filter, 105. It does not matter whichever of steps 104, 105 comes first or it may be simultaneously. Particularly if an integrated device is used the steps are already carried out. Finally the desired user equipment, e.g. Portable Parts (PPs) (for telephony services) are connected over a radio interface to the base station whereas broadband equipment e.g. PCs etc. are connected to broadband user interfaces of the broadband access means, 106.

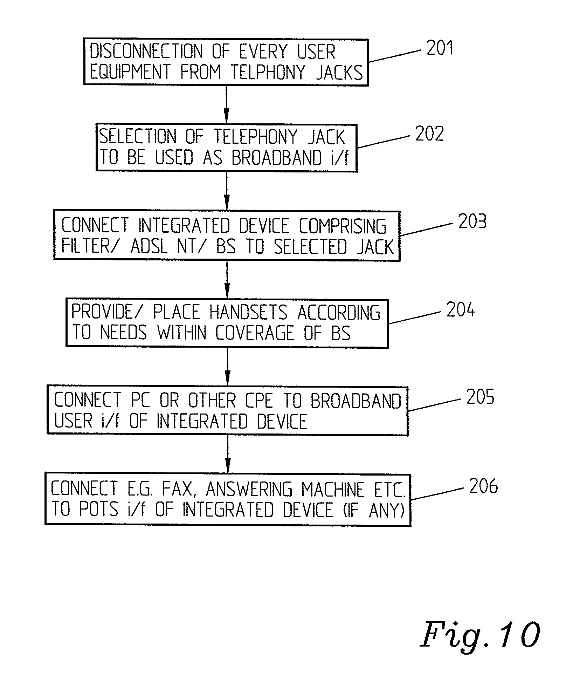

In Fig. 10 there is another flow diagram illustrating one example on installation of broadband and narrowband services access by ADSL at a customer premises. As in Fig. 9, first every piece of user equipment has to be disconnected from the respective telephony jacks, 201. A telephony jack is selected, which here is to be used for the provision of broadband services access, 202. Subsequently, in this embodiment, a device comprising an integrated splitter filter/ADSL NT/DECT BS is connected to the selected jack, 203. The DECT handsets are placed wherever needed within coverage of the DECT BS, 204, and a charging station for portable parts for communication with the DECT BS is placed wherever it is appropriate and connected to the power supply. Subsequently one or more PCs or other Customer Premises Equipment CPE is/are connected to broadband user interfaces, of the integrated device, 205 and, optionally, faxes, answering machines etc. may be connected to one or more POTS interfaces, if any, of the integrated device, 206.

It should be clear that the inventive concept is applicable also when there is no existing (POTS) distribution network at the customer premises. Then a distribution network is provided or installed and a jack (for broadband as well as narrowband services) is selected and a splitter filter, possibly with an integrated ADSL NT and appropriate narrowband access means (a separate network, e.g. a BS for cordless telephony, possibly a POTS interface, and possibly also an ISDN NT) is connected thereto. The functioning is the same as when an existing distribution network is used. It should be clear that the invention is not limited to the specifically illustrated embodiments, but that it can be varied in a number of ways without departing from the scope of the appended claims.

## Claims

1. A system for providing customer premises with broadband data communication services access and narrowband telecommunication services access using a cable (1) from a public communications network (PSTN,ISDN) and a distribution network comprising a number of (telephony) jacks (11,...,19;15') at the customer premises, wherein further ADSL technology is implemented,
**characterized in**
**that** the distribution network is used as a distribution network for both higher frequency signals for broadband communication and lower frequency signals for narrowband communication, that an optional (telephony) jack (17;15;12;15') is used for connection of a splitter filter (50;20₁;20₂;20₃;20₄;20₅) for separating higher frequency signals from lower frequency signals and in that broadband access means (50;30₁;30₂;30₃;30₄;30₅) are connected to a high frequency port (22₁;22₂) of the splitter filter, that narrowband access means (50;40₁,41₁;40A₂,40A₃,41₂; 40₃;40₄;40₅) are connected to a low frequency port (21₁;21₂) of the splitter filter (50;20₁;20₂;20₃;20₄;20₅), wherein each of said broadband and narrowband access means comprises a number of user interfaces.

2. A system according to claim 1,
**characterized in**
**that** the broadband access means (50;30₁;30₂;30₃;30₄;30₅) comprises an ADSL network termination.

3. A system according to claim 2,
**characterized in**
**that** the ADSL network termination comprises an ADSL modem and a number of broadband user interfaces (51;51₁,51₂;51₁₂,51₁₃) for communication with a number of user stations, e.g. Customer Premises Equipment (CPE) (60;CPE₁,CPE₂;60₃;60₄₁,60₄₂;60₅) such as a PC.

4. A system according to claim 3,
**characterized in**
**that** the broadband user interfaces (60;CPE₁,CPE₂;60₃;60₄₁, 60₄₂; 60₅) comprises one or more of an USB-interface, an ATM-interface and an Ethernet interface.

5. A system according to any one of claims 1-4,
**characterized in**
**that** the narrowband access means (50; 40₁, 41₁; 40A₂, 40A₃, 41₂; 40₃;40₄;40₅) comprises means for access to a separate, local area, network.

6. A system according to claim 5,
**characterized in**
**that** the separate local area network is wireless and in that the narrowband access means comprises a base station (40₁;40A₃;40₃;40₄;40₅).

7. A system according to claim 6,
**characterized in**
**that** the narrowband access means comprises a DECT base station.

8. A system according to any one of claims 5-7,
**characterized in**
**that** the narrowband access means comprises a POTS interface (41₁;41₂).

9. A system according to claim 5,
**characterized in**
**that** the separate network comprises an IR or copper distribution network.

10. A system according to any one of the preceding claims,
**characterized in**
**that** it is connected to a PSTN over the cable (1) e.g. a (twisted) pair cable or equivalent.

11. A system according to any one of claims 1-9,
**characterized in**
**that** it is connected to an ISDN network over the cable (1), e.g. a (twisted) pair cable or equivalent.

12. A system according to claim 11,
**characterized in**
**that** the narrowband access means comprises an ISDN network termination (40A₂) and in that said ISDN network termination includes converting means for conversion to (a) (POTS) interface(s) for connection to a separate local area network, e.g. a wireless local area network.

13. A system according to any one of the preceding claims,
**characterized in**
**that** the broadband and the narrowband access means are integrated in a common entity (50;50₁;50₂;50₃).

14. A system according to any one of claims 1-12,
**characterized in**
**that** the splitter filter and the broadband access means, e.g. a ADSL network termination, are integrated in a common entity (50;50₁;50₂;50₄).

15. A system according to any one of claims 1-12,
**characterized in**
**that** the splitter filter and the narrowband access means are integrated in a common entity (50;50₁;50₂;50₅).

16. A system according to anyone of claims 1-12,
**characterized in**
**that** the splitter filter, the narrowband access means and the broadband access means are integrated in a common entity (50;50₁;50₂).

17. A system according to any one of the preceding claims,
**characterized in**
**that** the entity comprising at least the splitter filter is detachably connected to a jack.

18. A system according to any one of the preceding claims,
**characterized in**
**that** the distribution network comprises an already, at the customer premises, existing distribution network for POTS services and in that said existing distribution network is used for distribution of narrowband services as well as broadband services.

19. An arrangement for providing broadband data communications access and narrowband telecommunications access at a customer premises comprising a distribution network, broadband access means comprising an ADSL network termination, and narrowband access means,
**characterized in**
**that** the distribution network is used for narrowband access as well as broadband access, that it comprises a number of jacks and in that a splitter filter is connected to an arbitrary, optional, jack of the distribution network for separating lower frequency signals for narrowband communication from higher frequency signals for broadband communication, and in that a separate network is used to distribute narrowband signals.

20. An arrangement according to claim 19,
**characterized in**
**that** the narrowband access means comprises a wireless radio base station, e.g. a DECT base station, and in that the separate network is a wireless local area network.

21. An arrangement according to claim 19 or 20,
**characterized in**
**that** the splitter filter, the broadband access means and the narrowband access means are provided as an integrated, common entity.

22. An arrangement according to claim 19 or 20,
**characterized in**
**that** either of the splitter filter, the broadband access means and the narrowband access means is provided as a separate entity whereas the remaining two of splitter filter, broadband access means, narrowband access means respectively are provided as an integrated, common entity.

23. An arrangement according to claim 19 or 20,
**characterized in**
**that** the splitter filter, the narrowband access means and the broadband access means are provided as three separate entities.

24. An arrangement according to any one of claims 21-23,
**characterized in**
**that** the entity comprising at least the splitter filter is detachably connected to a jack.

25. An arrangement according to one of claims 19-24,
**characterized in**
**that** an existing POTS distribution network at a customer premises is used for distribution of narrowband as well as broadband services.

26. A method for providing installation of broadband services access by means of ADSL at a customer premises,
**characterized in**
**that** it comprises the steps of:
- providing a distribution network including a number of jacks, or using an already existing distribution network for POTS services for communication with a public telecommunications network over a cable;
- selecting any one of the telephony jacks;
- connecting a splitter filter for separating higher frequency signals for broadband communication from lower frequency signals for narrowband communication to the selected jack;
- using broadband access means connected to the high frequency port of the splitter filter for broadband access;
- using narrowband access means connected to the low frequency port of the splitter filter including provision of a separate network for narrowband communication.

27. A method according to claim 26,
**characterized in**
**that** the separate network comprises a wireless local area network and in that the narrowband access means comprises at least a base station.

28. A method according to claim 27,
**characterized in**
**that** the wireless local area is a DECT access system and in that the base station comprises a DECT base station.

29. A method according to any one of claims 26-28,
**characterized in**
**that** it comprises the step of:
- detachably connecting an entity comprising at least a splitter filter to an optional jack.

30. A method according to claim 29,
**characterized in**
**that** the entity is an integrated entity also comprising broadband access means and/or narrowband access means with respective user interfaces.
